# EUROPÄISCHE PATENTSCHRIFT

(11) **EP 2 828 542 B1**
(45) Veröffentlichungstag und Bekanntmachung des Hinweises auf die Patenterteilung: **18.05.2016**
(21) Anmeldenummer: 13708434.9
(22) Anmeldetag: 11.03.2013
(51) Int. Cl.: F16D 13/75

(54) **NACHSTELLEINRICHTUNG FÜR EINE REIBKUPPLUNG**
ADJUSTMENT DEVICE FOR A FRICTION CLUTCH
DISPOSITIF DE RATTRAPAGE DE JEU POUR UN EMBRAYAGE À FRICTION

(30) Priorität: 21.03.2012 DE 102012204473
(43) Veröffentlichungstag der Anmeldung: 28.01.2015
(73) Patentinhaber: Schaeffler Technologies AG & Co. KG, 91074 Herzogenaurach (DE)
(72) Erfinder: AHNERT, Gerd, 77880 Sasbach (DE)
(86) Internationale Anmeldenummer: PCT/EP2013/054814
(87) Internationale Veröffentlichungsnummer: WO 2013/139634

(56) Entgegenhaltungen:
- DE-A1-102009 035 225
- US-A- 1 330 965
- US-A1- 2006 116 232

## Beschreibung

Die vorliegende Erfindung betrifft eine Nachstelleinrichtung für eine Reibkupplung gemäß dem Oberbegriff des Patentanspruchs 1 sowie eine Reibkupplung gemäß dem Oberbegriff des Patentanspruchs 4. Insbesondere betrifft die Erfindung eine Nachstelleinrichtung für eine Reibkupplung, die dazu eingerichtet ist, zum Beispiel bei abnehmender Reibbelagdicke der Reibkupplung eine Verlängerung der Einrückwege auszugleichen. Derartige Nachstelleinrichtungen beziehungsweise Reibkupplungen sind insbesondere bei Anfahrkupplungen von Kraftfahrzeugen einsetzbar.

Bei einer Reibkupplung wird zum Übertragen eines Drehmoments eine Mehrzahl von Reibflächen miteinander in Kontakt gebracht, während eine Relativbewegung zwischen diesen Reibflächen stattfindet. Hierbei findet zwangsläufig ein Verschleiß in Form von Materialabrieb statt, so dass sich der Abstand zwischen den zwei Reibflächen durch die Abnahme der Dicke der Reibbeläge über die zunehmende Abnutzung der Reibkupplung vergrößert. Einrückeinheiten müssen erhebliche Kräfte erzeugen, wozu eine aufwendige Konstruktion notwendig ist. Dabei ist es vorteilhaft, wenn diese Einrückeinheit trotz der Veränderung der Dicke der Reibbeläge über die Nutzungsdauer einen insbesondere konstanten und kurzen Einrückweg beschreibt. Damit der Verfahrweg der Einrückeinheit nicht unnötig lang wird, ist man für viele Anwendungen dazu übergegangen, eine Nachstelleinrichtung zu verwenden. Die Abnutzung der Reibbeläge ist abhängig vom Schaltverhalten sowie von der Nutzung der Reibkupplung und daher muss eine Nachstellung des sich verlängernden Einrückwegs individuell an die jeweilige Abnutzung der jeweiligen Reibkupplung angepasst werden. Auch treten in der Reibkupplung Setzungserscheinungen auf, die durch eine Nachstelleinrichtung ausgeglichen werden können.

Zum Verändern des Abstands zwischen den Reibflächen hat es sich durchgesetzt, eine Rampenkonstruktion auf der Rückseite der Anpressplatte mit einer korrespondierenden Rampenkonstruktion an einem Verstellring zu verwenden. Durch ein Verdrehen des Verstellrings in Umfangsrichtung wird die Lage der Anpressplatte axial in der Reibkupplung verändert, wodurch der Abstand zwischen den Reibflächen verändert wird. Die Einrückvorrichtung, die gegen die Rückseite des Verstellrings wirkt, beschreibt dabei einen - nahezu - konstanten Einrückweg. Um den Verstellring zu verdrehen, werden bisher Vorrichtungen verwendet, die tangential zum Anpressplattenumfang ausgerichtet sind, zum Beispiel ein Schneckentrieb, eine Spindel oder ein Zahnrad. Nachteilig bei solchen Konstruktionen ist, dass insbesondere Schneckentriebe und Spindeltriebe hohen Fliehkräften ausgesetzt sind, die quer zu ihrer axialen Ausrichtung gerichtet sind. Dadurch müssen die Lagerungen solcher Nachstelleinrichtungen besonders robust ausgerichtet sein und das Spiel zwischen den Elementen der Nachstelleinrichtung gering gehalten werden. Dadurch sind solche Nachstelleinrichtungen auch besonders empfindlich gegenüber Temperaturänderungen.

Eine Nachstelleinrichtung für eine Reibkupplung gemäß dem Oberbegriff des Patentanspruchs 1 und eine Reibkupplung gemäß dem Oberbegriff des Patentanspruchs 4 sind aus der DE 10 2009 035 225 A1 bekannt. Die US 2006/0116232 A1 offenbart ferner eine Nachstelleinrichtung, bei der die axiale Richtung der Nachstellspindel parallel zu einer radialen Richtung einer Reibkupplung ausrichtbar ist.

Der vorliegenden Erfindung liegt die Aufgabe zugrunde, die aus dem Stand der Technik bekannten Nachteile zumindest teilweise zu überwinden. Die Aufgabe wird gelöst durch die Merkmale der unabhängigen Patentansprüche. Vorteilhafte Weiterbildungen sind Gegenstand der abhängigen Patentansprüche.

Die Erfindung betrifft eine Nachstelleinrichtung für eine Reibkupplung, welche zumindest die folgenden Komponenten aufweist:
- verdrehbare Antriebsvorrichtung;
- Nachstellspindel mit einer axialen Richtung, die mit der Antriebsvorrichtung drehfest verbunden ist;
- Spindelmutter, die durch eine Verdrehung der Nachstellspindel in der axialen Richtung bewegt wird; und
- Stelleinheit zum Verstellen eines Abstands zwischen einer Einrückvorrichtung und einer Anpressplatte, die durch eine axiale Bewegung der Spindelmutter verstellt wird.
Die Nachstelleinrichtung ist dadurch gekennzeichnet, dass die axiale Richtung der Nachstellspindel parallel zu einer radialen Richtung einer Reibkupplung ausrichtbar ist.

Die Nachstelleinrichtung hält einen Einrückweg bei abnehmenden Dicken der Reibbeläge sowie bei Setzungserscheinungen den Einrückweg einer Reibkupplung konstant. Dieses wird zum Beispiel dadurch erreicht, dass ein Rampenkranz und eine Rampe auf der Rückseite einer Anpressplatte der Reibkupplung relativ zueinander verdreht werden. Hierdurch wird die Anpressplatte in Richtung der gegenüberliegenden Fläche bewegt, während die Rückseite des Rampenkranzes, auf den eine Einrückvorrichtung wirkt, axial fixiert ist. Die Nachstelleinrichtung weist eine verdrehbare Antriebsvorrichtung auf, die infolge einer Erfassung der Veränderung des Abstands zwischen einer Anpressplatte und der gegenüberliegenden Reibfläche verdreht wird. Zum Beispiel kann die Antriebsvorrichtung durch ein Rad mit einer Freilaufverzahnung realisiert werden, welches mittels einer Federlasche, die in die Freilaufverzahnung eingreift, bei einer Veränderung des Abstands während eines Einrückvorgangs verdreht wird. Dies kann zum Beispiel weggesteuert oder kraftgesteuert umgesetzt werden. Die Nachstellspindel weist eine axiale Richtung auf, um die die Spindel verdrehbar ist. Die Nachstellspindel weist dabei eine Spiralnut auf, über die die Spindelmutter durch Verdrehen der Nachstellspindel in dieser axialen Richtung bewegt wird. Dabei wird die Nachstellspindel über die Antriebsvorrichtung angetrieben, indem die beiden Komponenten drehfest miteinander verbunden sind. Wird also die Antriebsvorrichtung verdreht, so wird auch die Nachstellspindel verdreht und darüber wieder die Spindelmutter in der axialen Richtung bewegt. Die Spindelmutter ist dabei gegen eine Verdrehung um die axiale Richtung beziehungsweise um die Nachstellspindel gelagert, so dass die Verdrehung in eine translatorische Bewegung umgesetzt wird.

Weiterhin ist eine Stelleinheit vorgesehen, die zum Verstellen des Abstands zwischen der Einrückvorrichtung und der Anpressplatte beziehungsweise der abnutzenden Reibfläche der Anpressplatte eingerichtet ist. Hierzu kann die Stelleinrichtung zum Beispiel auf einen Rampenkranz derart einwirken, dass dieser eine Relativverdrehung zu der Rampe der Anpressplatte beschreibt und somit ein Einrücken beziehungsweise eine Bewegung in Einrückrichtung der Anpressplatte bewirkt. Die Stelleinheit wird dabei über die axiale Bewegung der Spindelmutter verstellt, so dass über die Eingabe der Antriebsvorrichtung die Stelleinheit den Abstand zwischen der Einrückvorrichtung und der Anpressplatte entsprechend einstellt.

Dabei ist die axiale Richtung der Nachstellspindel parallel zu einer radialen Richtung einer Reibkupplung ausrichtbar. Das bedeutet, die Nachstellspindel weist von der zentralen Achse der Reibkupplung, um die die Reibscheiben der Reibkupplung rotieren, zum Außenumfang der Reibkupplung. Diese Richtung entspricht der Fliehkraftrichtung beim Betrieb der Reibkupplung, die bei üblichen Drehzahlen, insbesondere von Verbrennungsmotoren, eine erhebliche Belastung der Bauteile bewirkt. Gerade eine Spindel ist durch die Spiralnut gegenüber Querkräften empfindlich und muss dagegen durch erhebliche Materialzunahme, das heißt eine Erhöhung der Flächenträgheit, verstärkt werden. Dies bedeutet eine Bauraumzunahme, eine Zunahme der Gewichtsbelastung auf die Anbauteile und einen zunehmenden Lageraufwand, um die Gewichtskräfte der Nachstelleinrichtung aufzunehmen. Bei der hier vorgeschlagenen Nachstellspindel ist diese Hauptbelastung in axialer Richtung der Nachstellspindel ausgerichtet. Somit tritt die Belastung in der steifsten Richtung der Nachstellspindel auf. Das heißt, die Nachstellspindel kann allein gegen Knickung ausgelegt werden. Die Nachstellspindel muss daher lediglich axial abgestützt werden und der Lageraufwand wird damit gering. Insgesamt kann eine solche Nachstelleinrichtung sehr viel kleiner und gewichtsärmer ausgelegt werden, wodurch auch wiederum der Gesamtaufbau der Reibkupplung weniger komplex wird.

In einer weiteren vorteilhaften Ausführungsform der Nachstelleinrichtung umfasst die Stelleinheit eine Kulisse und die Spindelmutter einen zu der Kulisse korrespondierenden Kulissenstein.

Zur Übertragung der Bewegung der Spindelmutter in radialer Richtung der Reibkupplung, zum Beispiel auf einen Rampenkranz, welcher sich um das Drehzentrum der Reibkupplung dreht also quer zur Ausrichtung der Nachstellspindel, eignet sich insbesondere eine Kulisse mit korrespondierendem Kulissenstein. Die Kulisse kann dabei zum Beispiel eine Nut sein, welche in etwa einer gerade Linie verläuft und bezüglich eines Radialstrahls beispielsweise eine Neigung von 30° bis 60°, vorzugsweise von etwa 45°, aufweist, und so eine translatorische Bewegung des Kulissensteins in radialer Richtung in eine Richtung umsetzt, welche quer dazu ausgerichtet ist. Der Kulissenstein ist bei einem solchen Beispiel in der Nut vorgesehen und gleitet bei einer Bewegung an der Nutwand der Kulisse entlang. Die Kulisse kann aber auch durch eine Erhebung und der Kulissenstein durch eine korrespondierende die Erhebung umgreifende Form gebildet sein. Zur Übersetzung der geraden Bewegung der Spindelmutter ist die Kulisse dabei insbesondere leicht gekrümmt, so dass eine gleichbleibende Übersetzung der Bewegung des Kulissensteins beziehungsweise der Spindelmutter stattfindet. Durch die Kulisse können aber auch unterschiedliche Übersetzungsverhältnisse umgesetzt werden, sofern dies für den Verlauf der Nachstellnut zur die Nachstelleinrichtung vorteilhaft ist.

Die Stelleinheit kann dabei ein separates Bauteil sein, welches zum Beispiel über eine Verzahnung mit dem Rampenkranz oder der Anpressplatte verbindbar ist. Hierdurch kann eine Bewegung in Einrückrichtung des Rampenkranzes beziehungsweise der Anpressplatte umgesetzt werden, ohne dass die Lage der Stelleinheit sich über diese Verstellung relativ zur Nachstellspindel verändert.

In einer weiteren vorteilhaften Ausführungsform der Nachstelleinrichtung ist die Spindelmutter axial von der Nachstellspindel entkoppelt gelagert.

Dazu kann die Spindelmutter derart gelagert werden, dass auftretende Kräfte, die quer zu der Nachstellspindel ausgerichtet sind, das heißt insbesondere die Gewichtskräfte der Spindelmutter bei einer Rotation der Reibkupplung, von der Nachstellspindel entkoppelt werden, so dass diese nur durch ihr Eigengewicht quer zur axialen Richtung belastet wird.

Gemäß einem weiteren Aspekt der Erfindung wird eine Reibkupplung vorgeschlagen, die zumindest die folgenden Komponenten aufweist:
- eine Anpressplatte, aufweisend eine Anpressseite und eine gegenüberliegenden Rückseite mit zumindest einer Rampe;
- einen zu der zumindest einen Rampe korrespondierenden Rampenkranz zum Verändern eines Abstands zwischen einer Einrückvorrichtung und der Anpressplatte durch Verdrehen des Rampenkranzes in Umfangsrichtung im Kontakt mit der zumindest einen Rampe der Anpressplatte; und
- eine Nachstelleinrichtung zum Verändern des Abstands mit einer axialen Richtung, dadurch gekennzeichnet, dass die axiale Richtung der Nachstelleinrichtung in radialer Richtung der Reibkupplung ausgerichtet ist.

Die Reibkupplung ist insbesondere dazu eingerichtet, ein Drehmoment lösbar zu übertragen, welches zum Beispiel von einer Antriebseinheit auf einen Antriebsstrang zu übertragen ist. Dabei ist häufig in dem Antriebsstrang eingangsseitig ein Schaltgetriebe vorgesehen, welches nur bei gelöster Drehmomentverbindung schaltbar ist, so dass eine Untersetzung beziehungsweise Übersetzung der Drehzahl beziehungsweise des Drehmoments von der Antriebseinheit auf den Antriebsstrang möglich ist. Die Übertragung des Drehmoments findet dabei über einen oder mehrere Reibpakete statt, welche sich aus einer Mehrzahl von zueinander korrespondierenden Reibflächen zusammensetzt, welche mittels einer Anpresskraft derart miteinander verbunden werden können, dass die anliegende Reibkraft ausreicht, ein Drehmoment von der einen Reibfläche auf die korrespondierende Reibfläche zu übertragen.

Zumindest eine der Reibflächen wird dabei rotationsfest mit einer Eingangswelle verbunden und die zumindest eine korrespondierende Reibfläche mit einer Ausgangswelle. Bei einem solchen Reibpaket wird die äußerste Reibfläche durch eine Anpressplatte gebildet, welche durch eine Einrückvorrichtung mit der korrespondierenden Reibfläche verpresst wird, um das Drehmoment zu übertragen. Die Anpressseite der Anpressplatte umfasst dabei eine Reibfläche und die gegenüberliegende Rückseite in Einrückrichtung ist zur Aufnahme der Anpresskraft über die Einrückvorrichtung eingerichtet. Auf dieser Rückseite ist zumindest eine Rampe vorgesehen, welche sich in Umfangsrichtung erstreckt und in Einrückrichtung aus der Rückseite der Anpressplatte hervorhebt. Die Neigung der Rampe ist dabei an die erwünschte Nachstellcharakteristik anzupassen. Auf dieser zumindest einen Rampe ist ein korrespondierender Rampenkranz vorgesehen, welcher durch eine Verdrehung in Umfangsrichtung also entlang der Neigung der Fläche der Rampe verdrehbar ist. Durch den Kontakt zwischen der zumindest einen Rampe und dem Rampenkranz wird die Anpressplatte in Einrückrichtung der Reibkupplung bewegbar. Der Rampenkranz ist dabei zwischen der Einrückvorrichtung und der Anpressplatte angeordnet. Dementsprechend wird der Abstand zwischen der Einrückvorrichtung und der Anpressplatte veränderbar. Durch die Nachstelleinrichtung wird der Rampenkranz in Umfangsrichtung verdreht und somit entsprechend einer Erfassung der Abnahme der Dicke der Reibbeläge der Reibkupplung wird der Abstand zwischen der Einrückvorrichtung und der Anpressplatte verändert, so dass der Abstand zwischen den Reibflächen nahezu konstant bliebt und der Einrückweg der Einrückvorrichtung ebenfalls nahezu konstant bliebt. Die Nachstelleinrichtung erstreckt sich dabei in einer axialen Richtung und ist durch eine Welle, insbesondere mit einer Schnecke oder einer Spindel gebildet. Vorteilhafterweise ist die Nachstelleinrichtung dabei in radialer Richtung der Reibkupplung ausgerichtet. Somit ist die Nachstelleinrichtung in vorteilhafter Weise entlang der Richtung der Fliehkräfte ausgerichtet, so dass die Gewichtskräfte in der Richtung mit der größten Flächenträgheit ausgerichtet sind. Insbesondere muss eine solche Nachstelleinrichtung allein gegen die eulersche Knickung ausgelegt werden, welche eine sehr geringe Flächenträgheit erlaubt und somit nur eine sehr viel geringere Masse erforderlich ist, als dies bei einer Auslegung gegen Querkräfte notwendig ist. Dadurch kann die Nachstelleinrichtung mit geringem Gewicht und geringer Bauraumanforderung konstruiert werden. Eine Übertragung der Drehung der Welle der Nachstelleinheit kann beispielsweise über ein Zahnrad stattfinden, welches in eine Zahnstange an dem Rampenkranz eingreift und somit die Lage des Rampenkranzes verändert.

In einer weiteren vorteilhaften Ausführungsform der Reibkupplung wird in der Reibkupplung eine Nachstelleinrichtung der obigen Beschreibung eingesetzt.

Eine Nachstellspindel ist besonders unempfindlich gegenüber einer Verdrehung bei einer Belastung in ihrer axialen Richtung, welche hier entlang der Fliehkraft ausgerichtet ist. Zudem kann sie mit einer besonders vorteilhaften Umsetzung der Nachstellung mittels einer Kulisse mit Kulissenstein eingesetzt werden. Darüber hinaus kann die Spindelmutter derart axial von der Nachstellspindel entkoppelt gelagert sein, dass die Kräfte auf die Nachstellspindel auf die Gewichtskräfte und Antriebskräfte reduziert werden. Darüber hinaus ist eine solche Anordnung bevorzugt selbsthemmend ausgeführt, so dass keine zusätzliche Feststellbremse vorzusehen ist, die ein unerwünschtes Weiterdrehen in Folge der Fliehkraft unterbindet.

In einer weiteren vorteilhaften Ausführungsform der Reibkupplung ist die Nachstelleinrichtung auf der Rückseite der Anpressplatte befestigt.

Bei der Verwendung der Rückseite der Anpressplatte als Befestigungsort für die Nachstelleinrichtung kann ausgenutzt werden, dass die Anpressplatte aufgrund der Übertragung der Anpresskräfte bereits ausreichend massiv ausgeführt werden muss, um die Nachstelleinrichtung sicher daran zu fixieren. Darüber hinaus kann insbesondere über eine Wegsteuerung die Veränderung des Abstands zwischen der Anpressplatte und der Einrückvorrichtung sicher realisiert werden, ohne dass ein weiteres Bauteil zur Fixierung der Nachstelleinrichtung vorgesehen sein muss.

In einer weiteren vorteilhaften Ausführungsform der Reibkupplung sind die Stelleinheit und der Rampenkranz einstückig ausgebildet und die Anpressplatte eine zur Anpressseite geneigte Rückseite aufweist.

Vorteilhafter Weise kann die Stelleinheit mit dem Rampenkranz oder der Anpressplatte fest verbunden sein beziehungsweise ein einstückiges Bauteil bilden. Hierdurch kann sich der Abstand zwischen der Stelleinheit und der Nachstellspindel verändern. Die Bewegung der Stelleinheit in Einrückrichtung wird dadurch ausgeglichen, dass die Nachstellspindel in Einrückrichtung geneigt ist und somit der Bewegung der Stelleinheit folgt. Eine solche Ausführungsform ist sehr robust und weist eine geringe Komplexität auf.

In einer weiteren vorteilhaften Ausführungsform der Reibkupplung ist die Antriebsvorrichtung der Nachstelleinrichtung an einem Außenumfang der Anpressplatte angeordnet.

Eine Anordnung am Außenumfang bedeutet hierbei insbesondere, dass die Antriebsvorrichtung in radialer Richtung betrachtet, nicht durch ein weiteres Bauteil verdeckt ist, sondern aus dieser Richtung frei zugänglich ist. Durch das Anordnen der Nachstelleinrichtung am Außenumfang der Anpressplatte wird der Zugang zu der Nachstelleinrichtung erleichtert. Insbesondere ist dabei vorteilhaft, die verdrehbare Antriebsvorrichtung der Nachstelleinrichtung nach außen anzuordnen, so dass zum Beispiel bei einem Werkstatteingriff, zum Beispiel für manuelles Nachstellen, der Zugriff ohne größeren Demontageaufwand möglich ist. Insbesondere können Teile der Nachstelleinrichtung durch eine kleine Öffnung in einem Gehäuse der Reibkupplung vorgenommen werden, was bei einer Queranordnung der Nachstelleinrichtung nicht möglich war.

In einer weiteren vorteilhaften Ausführungsform der Reibkupplung erstreckt die Nachstellspindel sich durch eine Aussparung in dem Rampenkranz, wobei die Aussparung zu der maximalen Verdrehung des Rampenkranzes korrespondiert.

Der Rampenkranz kann dabei aus mehreren Rampen zusammengesetzt sein, welche zu einer Mehrzahl von Rampen auf der Rückseite der Anpressplatte korrespondieren. Zwischen diesen Rampen entstehen Aussparungen, die ausreichen, um die hier beschriebene Nachstellspindel in radialer Richtung unterzubringen, so dass die Nachstellspindel sich von dem Außenumfang der Anpressplatte zum Drehzentrum der Reibkupplung erstrecken kann. Es ist aber auch eine einzige Rampenpaarung möglich. Ebenso kann in dem Rampenkranz eine zusätzliche Aussparung vorgesehen sein, die einem maximalen Drehwinkel des Rampenkranzes zum Nachstellen der Reibkupplung entspricht. Dadurch sind nur geringe oder keine konstruktiven Veränderungen an konventionellen Anpressplatten mit Nachstellringen notwendig, so dass eine notwendige Umkonstruktion der Reibkupplung mit der hier beschriebenen Nachstelleinrichtung sehr gering ist.

Gemäß einem weiteren Aspekt der Erfindung wird ein Kraftfahrzeug vorgeschlagen, welches eine Antriebseinheit mit einer Abtriebswelle, einen Antriebsstrang und eine Reibkupplung zum lösbaren Verbinden der Abtriebswelle mit dem Antriebsstrang aufweist, wobei die Antriebseinheit im Kraftfahrzeug vor einer Fahrerkabine und quer zu einer Längsachse des Kraftfahrzeugs angeordnet ist.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Nachstelleinrichtung beziehungsweise Reibkupplung ist für Kleinwagen besonders vorteilhaft, weil die Gesamtbaugröße klein ist und zugleich eine äußerste zuverlässige Nachstellung erreicht wird. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine Nachstelleinrichtung in Draufsicht auf einer Reibkupplung,
- Fig. 2:: eine Nachstelleinrichtung im Schnitt mit geneigter Anordnung,
- Fig. 3:: eine Nachstelleinrichtung wie in Fig. 2 mit verstelltem Kulissenstein,
- Fig. 4:: eine Nachstelleinrichtung in gerader Anordnung,
- Fig. 5:: ein Kraftfahrzeug mit einer Reibkupplung.

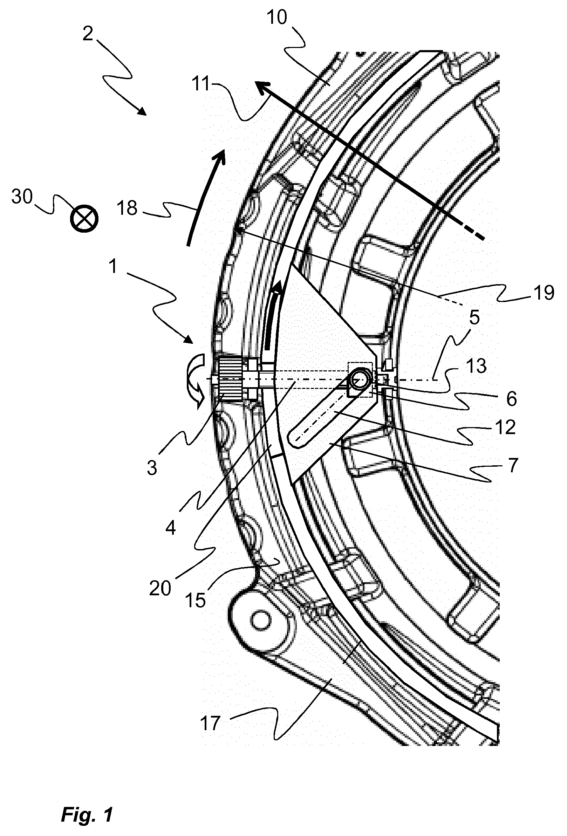

Fig. 1 zeigt eine Nachstelleinrichtung 1 in einer ausschnittsweise dargestellten Reibkupplung 2, wobei die Nachstelleinrichtung 1 auf der Rückseite 15 der Anpressplatte 10 angeordnet ist. Die axiale Richtung 5 der Nachstellspindel 4 ist parallel zu einer radialen Richtung 11 der Reibkupplung 2 angeordnet. Die verdrehbare Antriebsvorrichtung 3 ist am Außenumfang 19 der Anpressplatte 10 angeordnet. Die Nachstellspindel 4 erstreckt sich durch eine Aussparung 20 in dem Rampenkranz 17. Durch ein Verdrehen der Antriebsvorrichtung 3 bewegt sich die Spindelmutter 6 auf der Nachstellspindel 4 in axialer Richtung 5 nach außen (angedeutet durch einen Pfeil in Richtung links der Darstellung). Damit bewegt sich der Kulissenstein 13 in der Kulisse 12 der Stelleinheit 7 in axialer Richtung 5 beziehungsweise radialer Richtung 11 der Reibkupplung 2. Hierdurch wird der Rampenkranz 17 in Umfangsrichtung 18 bewegt, welches durch den Pfeil auf dem Rampenkranz 17 angedeutet ist. Die in dieser Darstellung verdeckte Rampe 16 der Anpressplatte 10 bewirkt zusammen mit dem Rampenkranz 17 so eine Bewegung der Anpressplatte 10 in Einrückrichtung 30, welche hier in die Bildebene hineinzeigt.

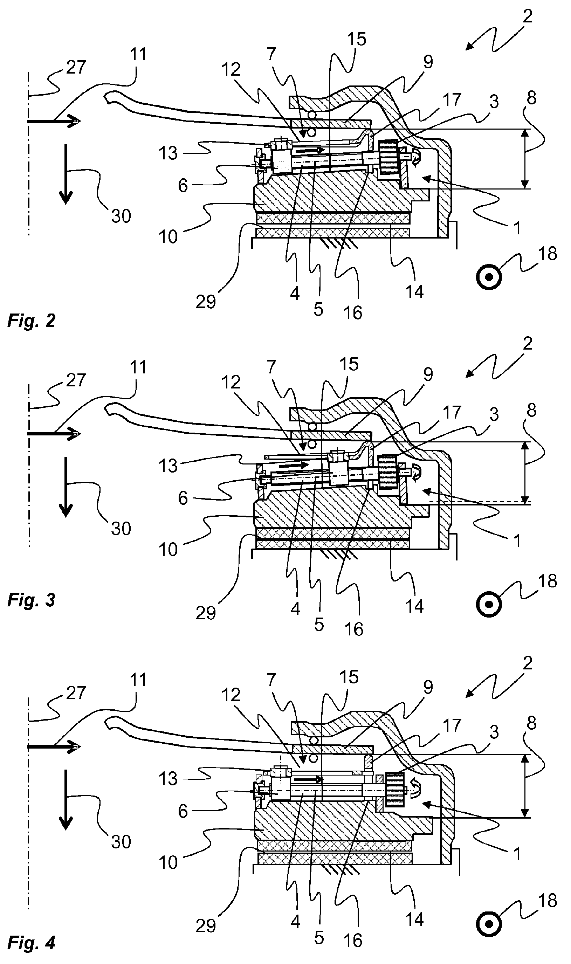

Fig. 2 zeigt eine Nachstelleinrichtung 1 im Schnitt, die in einer ausschnittsweise gezeigten Reibkupplung 2 angeordnet ist. In diesem Beispiel ist die Nachstelleinrichtung 1 mit der Antriebsvorrichtung 3 der Nachstellspindel 4 mit der axialen Richtung 5 auf einer geneigten Rückseite 15 der Anpressplatte 10 angeordnet. Hierdurch bewegt sich trotz zunehmendem Abstand 8 zwischen der Einrückvorrichtung 9 und der Anpressplatte 10 der Kulissenstein 13 in einer ausreichenden Höhe durch die Kulisse 12, wie es in der Fig. 3 gezeigt ist. Gegenüber der Rückseite 15 der Anpressplatte 10 ist die Anpressseite 14 vorgesehen, die gegenüber einer korrespondierenden Reibfläche 29 angeordnet ist. Durch die Einrückvorrichtung 9 wird die Anpressplatte in Einrückrichtung 30 bewegt, welche entlang der Rotationsachse 27 der Reibkupplung 2 ausgerichtet ist. Die Spindelmutter 6, welche durch eine Drehung der Antriebsvorrichtung 3 entlang der axialen Richtung 5 beziehungsweise der radialen Richtung 11 der Reibkupplung 2 bewegt wird, wird die hier mit dem Rampenkranz 17 einstückig ausgebildete Stelleinheit 7 in Umfangsrichtung 18 bewegt, welche hier aus der Bildebene herauszeigt. Hierdurch bewegt sich der Rampenkranz 17 auf der zumindest einen Rampe 16 der Anpressplatte 10, so dass der Abstand zwischen der Einrückvorrichtung 9 und der Anpressplatte 10 verändert wird und somit ein Abstand zwischen den verschleißenden Flächen der Anpressseite 14 und der korrespondierenden Reibfläche 29.

In Fig. 3 ist eine vollständig nachgestellte Reibkupplung 2 gezeigt, wobei durch die gestrichelte Linie die Änderung des Abstands 8 angedeutet ist. Ebenfalls ist in Fig. 3 zu erkennen, dass der Kulissenstein 13 durch die Neigung der Nachstellspindel 4 in der Kulisse 12 verbleibt, obwohl sich die Distanz zwischen der Rückseite 15 der Anpressplatte 10 und der Stelleinheit 7 mit dem zunehmenden Abstand 8 zwischen der Anpressplatte 10 und der Einrückvorrichtung 9 vergrößert. Im Übrigen entspricht die Fig. 3 der Fig. 2.

Fig. 4 zeigt eine ähnliche Anordnung wie in den Fig. 2 und 3, wobei hier die Nachstellspindel 4 mit ihrer axialen Richtung 5 parallel zu der Darstellung waagerechten Anpressseite 14 angeordnet ist. Hierbei stellen der Rampenkranz 17 und die Stelleinheit 7 zwei getrennte Bauteile dar. Die Stelleinheit 7 verbleibt mit einem konstanten Abstand zur Nachstellspindel 4 und der Rampenkranz 17, welcher auf der mindestens einen Rampe 16 hinaufwandert, wird zum Beispiel über eine Verzahnung an der Stelleinheit 7 mitgenommen, so dass eine Relativbewegung in Einrückrichtung 30 möglich ist. Auch bei dieser Ausführungsform verbleibt der Kulissenstein 13 in der Kulisse 12 und der Einrückvorgang ist somit sichergestellt.

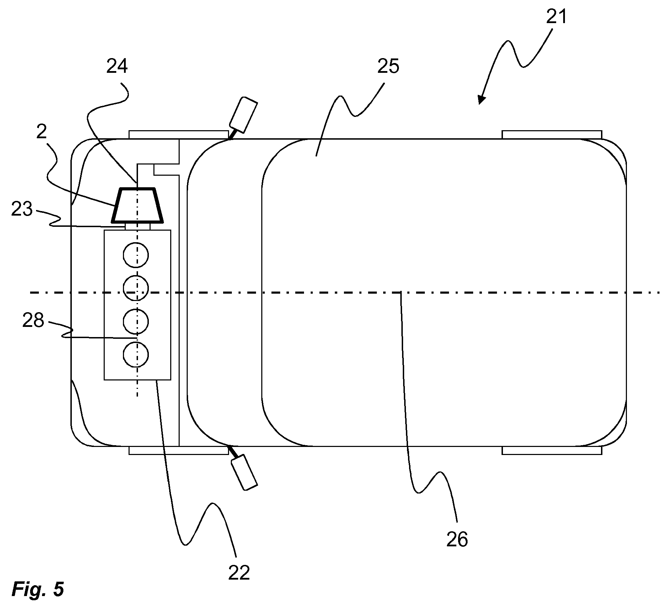

Fig. 5 zeigt ein Kraftfahrzeug 21 mit einer Antriebseinheit 22, die mit ihrer Abtriebswelle 23 über die Reibkupplung 2 lösbar mit einem rein schematisch dargestellten Antriebsstrang 24 verbunden ist. Die Antriebseinheit 22 ist mit ihrer Motorachse 28 quer zur Längsachse 26 des Kraftfahrzeugs 21 und vor der Fahrerkabine 25 angeordnet.

Mit der hier vorgeschlagenen Nachstelleinrichtung beziehungsweise Reibkupplung ist es möglich, mit geringeren Fertigungsanforderungen und geringerem Gewicht beziehungsweise Bauraum eine robuste Funktionseinheit zu realisieren, die gegenüber den anliegenden Fliehkräften ausreichend steif ausgelegt ist.

### Bezugszeichenliste

- 1: Nachstelleinrichtung
- 2: Reibkupplung
- 3: Antriebsvorrichtung
- 4: Nachstellspindel
- 5: axiale Richtung
- 6: Spindelmutter
- 7: Stelleinheit
- 8: Abstand
- 9: Einrückvorrichtung
- 10: Anpressplatte
- 11: radiale Richtung
- 12: Kulisse
- 13: Kulissenstein
- 14: Anpressseite
- 15: Rückseite
- 16: Rampe
- 17: Rampenkranz
- 18: Umfangsrichtung
- 19: Außenumfang
- 20: Aussparung
- 21: Kraftfahrzeug
- 22: Antriebseinheit
- 23: Abtriebswelle
- 24: Antriebsstrang
- 25: Fahrerkabine
- 26: Längsachse
- 27: Rotationsachse
- 28: Motorachse
- 29: korrespondierende Reibfläche
- 30: Einrückrichtung

## Patentansprüche

1. Nachstelleinrichtung (1) für eine Reibkupplung (2), aufweisend zumindest die folgenden Komponenten:
- verdrehbare Antriebsvorrichtung (3);
- Nachstellspindel (4) mit einer axialen Richtung (5), die mit der Antriebsvorrichtung (3) drehfest verbunden ist;
- Spindelmutter (6), die durch eine Verdrehung der Nachstellspindel (4) in der axialen Richtung (5) bewegt wird; und
- Stelleinheit (7) zum Verstellen eines Abstands (8) zwischen einer Einrückvorrichtung (9) und einer Anpressplatte (10), die durch eine axiale Bewegung der Spindelmutter (6) verstellt wird,
**dadurch gekennzeichnet, dass**
die axiale Richtung (5) der Nachstellspindel (4) parallel zu einer radialen Richtung (11) einer Reibkupplung (2) ausrichtbar ist.

2. Nachstelleinrichtung (1) nach Anspruch 1, wobei die Stelleinheit (7) eine Kulisse (12) und die Spindelmutter (6) einen zu der Kulisse (12) korrespondierenden Kulissenstein (13) umfasst.

3. Nachstelleinrichtung (1) nach einem der vorhergehenden Ansprüche, wobei die Spindelmutter (6) axial von der Nachstellspindel (4) entkoppelt gelagert ist.

4. Reibkupplung (2), aufweisend zumindest die folgenden Komponenten:
- eine Anpressplatte (10), aufweisend eine Anpressseite (14) und eine gegenüberliegenden Rückseite (15) mit zumindest einer Rampe (16);
- einen zu der zumindest einen Rampe (16) korrespondierenden Rampenkranz (17) zum Verändern eines Abstands (8) zwischen einer Einrückvorrichtung (9) und der Anpressplatte (10) durch Verdrehen des Rampenkranzes (17) in Umfangsrichtung (18) im Kontakt mit der zumindest einen Rampe (16) der Anpressplatte (10); und
- eine Nachstelleinrichtung (1) zum Verändern des Abstands (8) mit einer axialen Richtung (5),
**dadurch gekennzeichnet, dass**
die axiale Richtung (5) der Nachstelleinrichtung (1) nach eine der Ansprüche 1 bis 3 in radialer Richtung (11) der Reibkupplung (2) ausgerichtet ist.

5. Reibkupplung (2) nach Anspruch 4, wobei die Nachstelleinrichtung (1) auf der Rückseite (15) der Anpressplatte (10) befestigt ist.

6. Reibkupplung (2) nach einem der Ansprüchen 4 oder 5, wobei die Stelleinheit (7) und der Rampenkranz (17) einstückig ausgebildet sind und die Anpressplatte (10) eine zur Anpressseite (14) geneigte Rückseite (15) aufweist.

7. Reibkupplung (2) nach einem der Ansprüche 4 bits 6, wobei die Antriebsvorrichtung (3) der Nachstelleinrichtung (1) an einem Außenumfang (19) der Anpressplatte (10) angeordnet ist.

8. Reibkupplung (2) nach einem der Ansprüche 4 bis 7, wobei die Nachstellspindel (4) sich durch eine Aussparung (20) in dem Rampenkranz (17) erstreckt, wobei die Aussparung (20) zu der maximalen Verdrehung des Rampenkranzes (17) korrespondiert.

9. Kraftfahrzeug (21) aufweisend eine Antriebseinheit (22) mit einer Abtriebswelle (23), einen Antriebsstrang (24) und eine Reibkupplung (2) nach einem der Ansprüche 4 bis 8 zum lösbaren Verbinden der Abtriebswelle (23) mit dem Antriebsstrang (24), wobei die Antriebseinheit (22) im Kraftfahrzeug (21) vor einer Fahrerkabine (25) und quer zu einer Längsachse (26) des Kraftfahrzeugs (21) angeordnet ist.

## Claims

1. Readjustment device (1) for a friction clutch (2), having at least the following components:
- rotatable drive apparatus (3);
- readjustment spindle (4) with an axial direction (5), which readjustment spindle is connected rotationally conjointly to the drive apparatus (3);
- spindle nut (6) which is moved in the axial direction (5) by way of a rotation of the readjustment spindle (4); and
- actuating unit (7) for adjusting a spacing (8) between an engagement apparatus (9) and a pressure plate (10) which is adjusted by way of an axial movement of the spindle nut (6),
**characterized in that**
the axial direction (5) of the readjustment spindle (4) can be oriented parallel to a radial direction (11) of a friction clutch (2).

2. Readjustment device (1) according to Claim 1, wherein the actuating unit (7) comprises a sliding-block guide (12), and the spindle nut (6) comprises a sliding block (13) which corresponds to the sliding-block guide (12).

3. Readjustment device (1) according to one of the preceding claims, wherein the spindle nut (6) is mounted so as to be axially decoupled from the readjustment spindle (4).

4. Friction clutch (2), having at least the following components:
- a pressure plate (10), having a pressure side (14) and an oppositely situated rear side (15) with at least one ramp (16);
- a ramp ring (17) which corresponds to the at least one ramp (16) and which serves for varying a spacing (8) between an engagement apparatus (9) and the pressure plate (10) by way of rotation of the ramp ring (17) in a circumferential direction (18) in contact with the at least one ramp (16) of the pressure plate (10); and
- a readjustment device (1) for varying the spacing (8), which readjustment device has an axial direction (5),
**characterized in that**
the axial direction (5) of the readjustment device (1) according to one of Claims 1 to 3 is oriented in a radial direction (11) of the friction clutch (2).

5. Friction clutch (2) according to Claim 4, wherein the readjustment device (1) is fastened to the rear side (15) of the pressure plate (10).

6. Friction clutch (2) according to either of Claims 4 and 5, wherein the actuating unit (7) and the ramp ring (17) are formed in one piece, and the pressure plate (10) has a rear side (15) which is inclined relative to the pressure side (14).

7. Friction clutch (2) according to one of Claims 4 to 6, wherein the drive apparatus (3) of the readjustment device (1) is arranged on an outer circumference (19) of the pressure plate (10).

8. Friction clutch (2) according to one of Claims 4 to 7, wherein the readjustment spindle (4) extends through a recess (20) in the ramp ring (17), wherein the recess (20) corresponds to the maximum rotation of the ramp ring (17).

9. Motor vehicle (21) having a drive unit (22) with an output shaft (23), having a drivetrain (24), and having a friction clutch (2) according to one of Claims 4 to 8 for the releasable connection of the output shaft (23) to the drivetrain (24), wherein the drive unit (22) is arranged in the motor vehicle (21) in front of a driver's cabin (25) and transversely with respect to a longitudinal axis (26) of the motor vehicle (21).

## Revendications

1. Dispositif de rattrapage de jeu (1) pour un embrayage à friction (2), comportant au moins les composants suivantes :
- un dispositif d'entraînement (3) pouvant tourner ;
- un arbre de rattrapage de jeu (4) avec une direction axiale (5) reliée solidairement en rotation au dispositif d'entraînement (3) ;
- un écrou d'arbre (6) déplacé par rotation de l'arbre de rattrapage de jeu (4) dans la direction axiale (5) ; et
- une unité de réglage (7) permettant de régler un écartement (8) entre un dispositif d'insertion (9) et une plaque de compression (10) pouvant être réglée par un mouvement axial de l'écrou d'arbre (6) ;
**caractérisé en ce que** la direction axiale (5) de l'arbre de rattrapage de jeu (4) peut être orientée parallèlement à une direction radiale (11) d'un embrayage à friction (2).

2. Dispositif de rattrapage de jeu (1) selon la revendication 1, l'unité de réglage (7) comprenant une coulisse (12) et l'écrou d'arbre (6) comprenant un glisseur (13) correspondant à la coulisse (12).

3. Dispositif de rattrapage de jeu (1) selon l'une quelconque des revendications précédentes, l'écrou d'arbre (6) étant disposé de façon à être découplé dans le plan axial de l'arbre de rattrapage de jeu (4).

4. Embrayage à friction (2), comportant au moins les composants suivantes :
- une plaque de compression (10), comportant un côté de compression (14) et un côté arrière (15) opposé doté d'au moins une rampe (15) ;
- une couronne de rampe (17) correspondant à l'au moins une rampe (16) pour modifier un écartement (8) entre un dispositif d'insertion (9) et la plaque de compression (10) par rotation de la couronne de rampe (17) dans la direction circonférentielle (18) au contact de l'au moins une rampe (16) de la plaque de compression (10) ; et
- un dispositif de rattrapage de jeu (1) permettant de modifier l'écartement (8) avec une direction axiale (5) ;
**caractérisé en ce que** la direction axiale (5) du dispositif de rattrapage de jeu (1) selon l'une quelconque des revendications 1 à 3 est orientée dans la direction radiale (11) de l'embrayage à friction (2).

5. Embrayage à friction (2) selon la revendication 4, le dispositif de rattrapage de jeu (1) étant fixé sur le côté arrière (15) de la plaque de compression (10).

6. Embrayage à friction (2) selon l'une quelconque des revendications 4 ou 5, l'unité de réglage (7) et la couronne de rampe (17) étant réalisées d'un seul tenant et la plaque de compression (10) comportant un côté arrière (15) incliné en direction du côté de compression (14).

7. Embrayage à friction (2) selon l'une quelconque des revendications 4 à 6, le dispositif d'entraînement (3) du dispositif de rattrapage de jeu (1) étant disposé au niveau d'une périphérie extérieure (19) de la plaque de compression (10).

8. Embrayage à friction (2) selon l'une quelconque des revendications 4 à 7, l'arbre de rattrapage de jeu (4) s'étendant à travers un évidement (20) pratiqué dans la couronne de rampe (17), l'évidement (20) correspondant à la rotation maximale de la couronne de rampe (17).

9. Véhicule automobile (21) comportant une unité d'entraînement (22) avec un arbre d'entraînement en sortie (23), une chaîne cinématique (24) et un embrayage à friction (2) selon l'une quelconque des revendications 4 à 8 permettant de relier de façon amovible l'arbre d'entraînement en sortie (23) à la chaîne cinématique (24), l'unité d'entraînement (22) étant disposée dans le véhicule automobile (21) avant une cabine de conducteur (25) et transversalement à un axe longitudinal (26) du véhicule automobile (21).
